# FASCICULE DE BREVET EUROPEEN

(11) **EP 2 674 668 B1**
(45) Date de publication et mention de la délivrance du brevet: **14.10.2015**
(21) Numéro de dépôt: 13171798.5
(22) Date de dépôt: 13.06.2013
(51) Int. Cl.: F21V 5/04, F21V 7/00, B64F 1/20, F21Y 101/02, F21Y 103/00

(54) **Dispositif d'éclairage de piste à DEL et optique spécifique dédiée**
Start- und Landebahn LED Beleuchtungseinheit und zugehörige Optik
Runway LED lighting device and dedicated specific optics

(30) Priorité: 14.06.2012 FR 1255578
(43) Date de publication de la demande: 18.12.2013
(73) Titulaire: ECE, 75020 Paris (FR)
(72) Inventeur: Lauret, Jean-Pierre, 01100 OYONNAX (FR); Tsao, Christian, 93110 ROSNY SOUS BOIS (FR)
(74) Mandataire: Delprat, Olivier

(56) Documents cités:
- DE-A1-102005 005 860
- US-A- 5 526 190
- US-A1- 2010 128 233
- US-A1- 2011 026 247

## Description

L'invention concerne un dispositif d'éclairage comprenant pour source lumineuse un ensemble de diodes électroluminescentes, et plus particulièrement un dispositif d'éclairage extérieur spécifique pour aéronef.

Un aéronef comprend généralement plusieurs dispositifs d'éclairage extérieur destinés chacun à l'éclairage d'une zone extérieure lors du déplacement de l'appareil en vol ou au sol. Un aéronef comprend ainsi en général des feux d'atterrissage disposés sur les ailes et destinés à l'éclairage de la piste d'atterrissage lorsque l'avion est en approche de la piste ou lors du décollage, une lumière d'anticollision clignotante montée sur le haut de l'aileron arrière, et des feux de position montés sur l'extrémité de chaque aile. Ils comprennent également des dispositifs d'éclairage de type « taxi » montés sur le nez de l'aéronef pour éclairer la voie sur laquelle l'aéronef circule lorsqu'il se déplace au sol, et des dispositifs d'éclairage complémentaires dénommés en anglais « runway turn-off lights » (RTO).

Les dispositifs d'éclairage de piste de type « taxi » et « runway turn-off » sont destinés à aider l'équipage à bien visualiser les virages dans les voies de type « taxiway/runway » vers l'avant et dans les virages. Les dispositifs d'éclairage de type « taxi » sont généralement montés sur le train avant de l'aéronef et sont destinés à éclairer vers l'avant de l'appareil, tandis que les dispositifs d'éclairage de type « runway turn-off » sont généralement montés sur le train avant ou sur l'avant des ailes orientés de part et d'autre de l'avant de l'aéronef à des angles compris environ entre 35° et 55° de manière à éclairer les virages et améliorer ainsi la visibilité dans les virages.

Ces dispositifs d'éclairage de piste doivent fournir un faisceau relativement puissant sur une distance d'environ 30m devant l'avion avec un faisceau lumineux s'étendant latéralement dans un plan horizontal, c'est-à-dire relativement parallèle aux ailes de l'avion au dièdre près, mais concentré dans un plan vertical, c'est-à-dire relativement orthogonal aux ailes de l'avion au dièdre près. En effet, seul l'éclairement de la piste dans un virage est nécessaire.

Les dispositifs d'éclairage de la piste comprennent généralement pour source lumineuse une ampoule à filament générant un faisceau lumineux dans toutes les directions à partir du filament et un miroir permettant de rediriger une partie du faisceau lumineux vers l'avant. Une ampoule à filament présente une fragilité importante lorsque le filament est chauffé, réduisant sa durée de vie. De plus, la puissance électrique consommée pour le fonctionnement du filament, et donc l'émission du faisceau lumineux est également importante.

US5,526,190 et DE102005005860 divulguent des dispositifs d'éclairage de l'état de l'art.

L'invention se propose de pallier les inconvénients mentionnés ci-dessus en proposant un dispositif d'éclairage utilisant des diodes électroluminescentes comme source lumineuse, et une optique spécifique adaptée à la source lumineuse pour générer un faisceau lumineux ayant un diagramme d'éclairement répondant aux besoins des pilotes pour visualiser la piste sur un angle plus large.

Selon un aspect, il est proposé, dans l'invention, un dispositif d'éclairage comprenant une source lumineuse et un élément optique, la source lumineuse comprenant une pluralité de diodes électroluminescentes alignées, et l'élément optique étant conformé pour concentrer un faisceau lumineux émis par la source lumineuse dans un plan orthogonal à la ligne de diodes électroluminescentes et dévier ledit faisceau lumineux parallèlement à un plan d'éclairement comprenant la ligne de diodes électroluminescentes de manière à former un faisceau lumineux ayant une section ellipsoïdale.

Dans une alternative, le dispositif peut comprendre une source lumineuse comprenant plusieurs lignes de diodes électroluminescentes disposées de manière à obtenir un faisceau lumineux ayant une longueur dans le plan d'éclairement plus grande que dans le plan orthogonal au plan d'éclairement. Dans cette configuration, les dimensions de l'élément optique sont plus importantes que dans le cas d'une source lumineuse possédant une ligne de diodes électroluminescentes.

L'utilisation de diodes électroluminescentes comme source lumineuse permet d'avoir une source lumineuse consommant moins de puissance électrique qu'une lampe à filament, et dont la durée de vie est plus importante que celle d'une lampe à filament. De plus, une diode électroluminescente ne présente pas de sensibilité aux vibrations contrairement à une ampoule comprenant un filament.

Par ailleurs, la taille réduite des diodes électroluminescentes permet, d'une part, de réduire l'encombrement, et d'autre part, d'en utiliser une pluralité et de les aligner afin de former un segment de droite. Une telle disposition permet d'avoir dès l'entrée de l'ensemble optique un faisceau lumineux s'étendant principalement dans une direction privilégiée, c'est-à-dire dans le plan d'éclairement comprenant les diodes électroluminescentes. En effet, le faisceau lumineux émis par une diode à électroluminescente est un faisceau plus directionnel que le faisceau lumineux d'une ampoule à filament.

La source lumineuse comprenant une pluralité de diodes électroluminescentes alignées, l'ensemble optique associé doit être adapté, notamment au faisceau lumineux émis par l'ensemble des diodes électroluminescentes.

De préférence, l'élément optique comprend une surface d'entrée et au moins deux surfaces de sortie, et possède une forme générale de lentille convergente dans le plan orthogonal.

Le plan d'éclairement correspond au plan comprenant les diodes électroluminescentes et s'étendant vers l'avant desdites diodes électroluminescentes. Pour un dispositif d'éclairage dédié à l'éclairement des voies ou pistes, sur le côté ou devant l'avion, l'ensemble optique doit dévier le faisceau lumineux de manière à projeter le faisceau lumineux principalement sur la piste et sur une surface assez large devant et/ou autour de l'avion. Par conséquent, le faisceau lumineux doit avoir une section ellipsoïdale avec un grand rayon s'étendant dans le plan d'éclairement et un petit rayon s'étendant dans le plan orthogonal au plan d'éclairement. L'ensemble optique correspond donc à une lentille convergente dans le plan orthogonal.

L'élément optique comprend une portion optique centrale et deux portions optiques périphériques disposées de part et d'autre de la portion optique centrale dans le plan orthogonal.

Les deux portions optiques périphériques disposées de part et d'autre de la portion optique centrale dans le plan orthogonal sont destinées à concentrer le faisceau lumineux dans le plan orthogonal, de manière à augmenter la puissance lumineuse du faisceau lumineux.

La portion optique centrale comprendre une surface de sortie centrale en forme de tore asphérique dans le plan d'éclairement et apte à transmettre le faisceau lumineux.

La portion optique centrale possède donc une forme proche de celle d'une portion de sphère mais non strictement sphérique. Les lentilles de forme traditionnelle sont généralement de forme sphérique, ce qui conduit à des aberrations optiques. En effet, par exemple, les rayons qui passent par le centre ne convergent pas tout-à-fait au même point que ceux qui passent par les bords. Une lentille asphérique n'est pas affectée par ce phénomène.

Par ailleurs, la lentille en forme de tore permet de fortement concentrer le faisceau lumineux dans le plan orthogonal, par exemple de 180° à 10° environ, et de faire converger plus légèrement , par exemple de 180° à environ 50°, le faisceau lumineux dans le plan d'éclairement de manière à conserver une certaine puissance lumineuse

Avantageusement, chaque portion optique périphérique comprend une surface de sortie périphérique en forme de dioptre cylindrique convergent dans un plan parallèle au plan d'éclairement et apte à transmettre le faisceau lumineux, et une surface de réflexion semi-parabolique dans le plan orthogonal, apte à réfléchir le faisceau lumineux de la source lumineuse vers ladite surface de sortie, les surfaces de réflexion des deux portions optiques périphériques formant conjointement une lentille réfléchissante parabolique.

Chaque portion optique périphérique comprend ainsi une surface de réflexion semi-parabolique s'étendant entre la source lumineuse et la surface de sortie périphérique correspondante, permettant de réfléchir les rayons lumineux émis vers la surface de sortie périphérique et ainsi de concentrer le faisceau lumineux dans le plan orthogonal et d'augmenter la puissance du faisceau lumineux éclairant la voie ou la piste. La forme de dioptre cylindrique des surfaces de sortie périphérique permet de faire converger le faisceau lumineux dans le plan d'éclairement de manière à maintenir une certaine puissance lumineuse, et de dévier le moins possible les rayons lumineux dans le plan orthogonal, les rayons lumineux ayant déjà été déviés par les surfaces réfléchissantes de manière à faire fortement converger le faisceau lumineux.

L'ensemble optique comprend ainsi des surfaces de sortie complexes et plus particulièrement extrudées, c'est-à-dire qui ne sont pas axisymétriques contrairement aux optiques standards qui le sont. Ces surfaces extrudées ont des formes prismatiques permettant d'avoir un faisceau elliptique. Elles permettent ainsi d'obtenir des ouvertures de faisceau bien distinctes dans le plan d'éclairement, par exemple une ouverture supérieure à 35° et de préférence supérieure à 40°, et dans le plan orthogonal, par exemple une ouverture de faisceau comprise entre 5° et 20°, et plus particulièrement entre 7° et 14°.

La surface d'entrée de l'ensemble optique peut avantageusement posséder une surface cylindrique selon le plan d'éclairement, de sorte que le faisceau lumineux émis par la source lumineuse soit dévié le moins possible.

Selon un autre aspect, il est également proposé un ensemble d'éclairage comprenant une pluralité de dispositifs d'éclairage tels que définis ci-dessus alignés dans ledit plan orthogonal.

La taille réduite de la source lumineuse permet d'utiliser un ensemble optique de taille réduite et ainsi de fortement réduire l'encombrement du dispositif d'éclairage. Cela permet ainsi d'associer plusieurs dispositifs d'éclairage afin d'augmenter la puissance lumineuse et les dimensions de la section du faisceau lumineux. Ainsi en associant une pluralité de dispositifs d'éclairage selon le plan orthogonal, on obtient un faisceau lumineux de forte puissance et de section elliptique plus importante pour un encombrement réduit.

D'autres avantages et caractéristiques de l'invention apparaîtront à l'examen de la description d'un mode de réalisation détaillé de l'invention nullement limitatif, et des dessins annexés, sur lesquels :
- la figure 1 illustre un dispositif d'éclairage en perspective selon un mode de réalisation de l'invention ;
- la figure 2 présente de manière schématique une vue en coupe dans un plan orthogonal au plan d'éclairement le dispositif d'éclairage de la figure 1 ;
- la figure 3 présente de manière schématique une vue en coupe dans le plan d'éclairement le dispositif d'éclairage de la figure 1 ;
- la figure 4 illustre un ensemble d'éclairage selon un mode de réalisation.

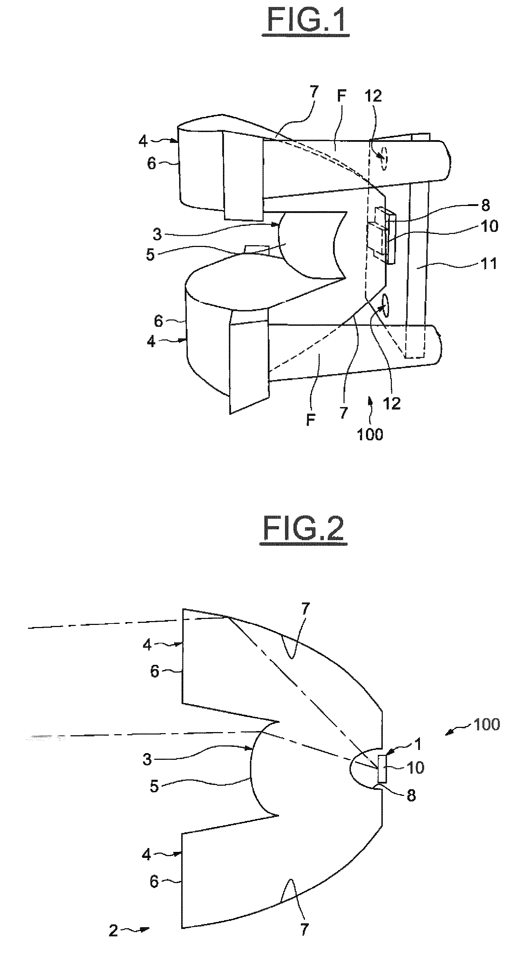

Sur la figure 1 est représenté en perspective de côté un dispositif d'éclairage 100 selon un mode de réalisation.

Le dispositif d'éclairage 100 comprend une source lumineuse 1 et une lentille optique 2. La source lumineuse 1 comporte une pluralité de diodes électroluminescentes 10 alignées de manière à former un segment de droite. Les diodes électroluminescentes 10 sont montées sur une plaque de support 11 comprenant des orifices 12 pour la fixation de la plaque de support 11 de la source lumineuse 1 sur un phare 1000, par exemple. La plaque de support est réalisée de manière à ce que les diodes électroluminescentes 10 montées sur une face de la plaque de support 11 puissent être couplées à une alimentation électrique et une électronique de commande via la face opposée.

La lentille optique 2 est destinée à être fixée sur le phare 1000 via des éléments de fixation F en encadrant la plaque de support 1 de la source lumineuse 1. La lentille optique 1 comprend une portion optique centrale 3 et deux portions optiques périphériques 4 disposées de part et d'autre de la portion optique centrale 3 dans un plan orthogonal au plan d'éclairement défini par le segment de droite formé par les diodes électroluminescentes 10 de la source lumineuse 1.

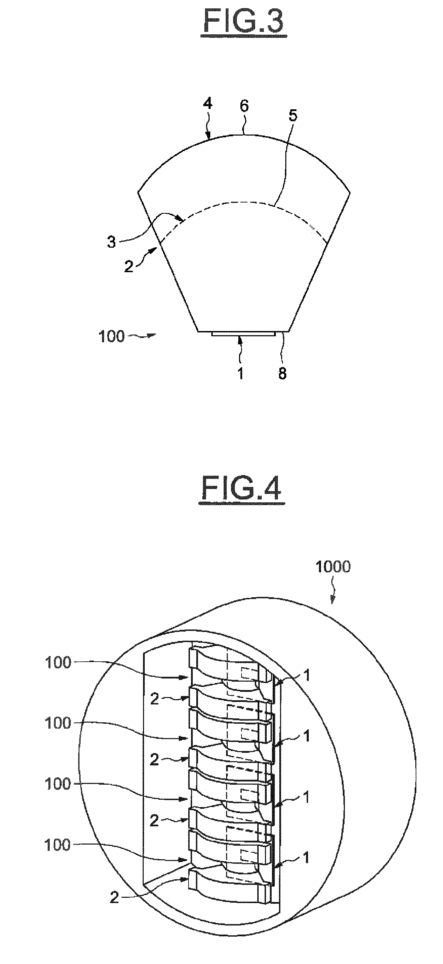

La portion optique centrale 3 de la lentille optique 2 possède une forme de tore asphérique dans le plan d'éclairement permettant d'avoir une courbure de la surface de sortie centrale 5 plus importante dans le plan orthogonal que dans le plan d'éclairement, comme cela est illustré sur les figures 2 et 3.

Les figures 2 et 3 présentent, de manière schématique, le dispositif d'éclairage 100 de la figure 1 respectivement selon une vue en coupe dans un plan orthogonal au plan d'éclairement, et selon une vue en coupe dans le plan d'éclairement. Sur la figure 2, deux exemples de rayons lumineux émis par la source lumineuse 1 sont représentés en pointillés.

La courbure de la portion optique centrale 3 étant plus importante dans le plan orthogonal que dans le plan d'éclairement, la convergence du faisceau est plus importante dans le plan orthogonal que dans le plan d'éclairement. Le point de convergence dans le plan d'éclairement est donc plus éloigné de la source lumineuse 1 que le point de convergence dans le plan orthogonal. Ainsi, au point de convergence dans le plan orthogonal, le faisceau lumineux correspondra approximativement à un segment de droite. En avant de ce point de focalisation dans le plan orthogonal, le faisceau lumineux aura une section en forme d'ellipse possédant une dimension plus petite dans le plan orthogonal que dans le plan d'éclairement.

Comme cela est illustré sur les figures 1 à 3, les portions optiques périphériques 4 de la lentille optique 2 comprennent chacune une surface de sortie périphérique 6 et une surface de réflexion 7.

La surface de sortie périphérique 7 possède une forme de dioptre cylindrique convergent dans un plan parallèle au plan d'éclairement. La surface de sortie périphérique 7 dévie ainsi le faisceau lumineux par transmission en faisant converger le faisceau lumineux selon un plan parallèle au plan d'éclairement. Comme cela est illustré sur la figure 3, la courbure de la portion optique périphérique 7 dans un plan parallèle au plan d'éclairement est comparable voire identique à la courbure de la portion optique centrale 3, représentée en pointillés sur la figure 3, dans le plan d'éclairement. La convergence du faisceau lumineux dans des plans parallèles au plan d'éclairement est ainsi la même ou sensiblement la même que la convergence du faisceau lumineux dans le plan d'éclairement réalisée par la portion optique centrale 3. La forme de dioptre cylindrique de la surface de sortie périphérique 7 permet d'obtenir une très faible déviation du faisceau lumineux dans le pan orthogonal.

Chaque surface de réflexion 7 possède une forme semi-parabolique dans le plan orthogonal et est montée entre la source lumineuse, et plus particulièrement la plaque de support 11, et la surface de sortie périphérique correspondante 7. Chaque surface de réflexion 7 est réalisée de manière à réfléchir le faisceau lumineux de la source lumineuse 1 vers la surface de sortie périphérique 6 correspondante. Ainsi, les surfaces de réflexion 7 des deux portions optiques périphériques 4 forment conjointement une lentille réfléchissante parabolique.

La convergence optique du faisceau lumineux émis par les diodes électroluminescentes 10 de la source lumineuse 1 est ainsi réalisée, pour la partie du faisceau lumineux ne passant pas par la portion optique centrale 3, par les surfaces de réflexion 7. Les surfaces de réflexion 7 sont réalisées de sorte que le point de focalisation de la lentille réfléchissante parabolique formée par les deux surfaces réfléchissantes 7 corresponde sensiblement au point de focalisation dans le plan orthogonal de la portion optique centrale 3.

La lentille optique 2 comprend une surface d'entrée 8. La lentille 2 est assemblée sur le phare 1000 ou directement avec la plaque de manière à être disposée en regard des diodes électroluminescentes 10 alignées formant la source lumineuse 1. La surface d'entrée est réalisée de manière à dévier le moins possible le faisceau lumineux émis par les diodes électroluminescentes 10. Pour cela, la surface d'entrée possède une forme cylindrique dont l'axe est défini par la ligne de diodes électroluminescentes 10.

Un tel dispositif d'éclairage 100 permet de réduire l'encombrement de part les dimensions réduites des diodes électroluminescentes 10 et, par conséquent, celles de la lentille optique 2 associée. Pour augmenter la puissance lumineuse émise, il est possible de monter plusieurs dispositifs d'éclairage 100 dans un phare 1000.

La figure 5 illustre un ensemble d'éclairage 1000, tel qu'un phare de type RTO (« Runway Turn- Off » en anglais) pour aéronef, comprenant une pluralité de dispositifs d'éclairage 100 de la figure 1.

Les dispositifs d'éclairage 100 de la figure 5 sont assemblés de manière à être alignés dans le plan orthogonal. Le faisceau lumineux ainsi obtenu comprend ainsi une section elliptique possédant un petit rayon dans le plan orthogonal et un grand rayon dans un plan parallèle aux plans d'éclairement des dispositifs d'éclairage 100. La dimension du petit rayon du phare 1000 est plus grande que celle pour un seul dispositif d'éclairage 100.

Par ailleurs, en alimentant les sources lumineuses 1 des dispositifs d'éclairage 100 du phare 1000 en parallèle il est possible de pallier la mise en défaut de l'un des dispositifs d'éclairage 100. En effet, le phare 1000 continue de fonctionner avec une puissance lumineuse légèrement réduite.

L'invention propose ainsi un ensemble d'éclairage, tel qu'un phare, comprenant une pluralité de dispositifs d'éclairage utilisant des diodes électroluminescentes comme source lumineuse et une optique spécifique adaptée, permettant ainsi de réduire la consommation électrique nécessaire, de prolonger la durée de vie du phare avant le remplacement de la source lumineuse, de réduire l'encombrement, et de pallier au moins partiellement la mise en défaut d'un dispositif d'éclairage.

## Revendications

1. Dispositif d'éclairage (100) comprenant une source lumineuse (1) et un élément optique (2), la source lumineuse (1) comprenant une pluralité de diodes électroluminescentes (10) alignées, et l'élément optique (2) étant conformé pour dévier un faisceau lumineux émis par la source lumineuse (1) parallèlement à un plan d'éclairement comprenant la ligne de diodes électroluminescentes (10) et s'étendant vers l'avant desdites diodes électroluminescentes (10) et concentrer ledit faisceau lumineux dans un plan orthogonal au plan d'éclairement , de manière à former un faisceau lumineux ayant une section ellipsoïdale, l'élément optique (2) comprenant une portion optique centrale (3) et deux portions optiques périphériques (4) disposées de part et d'autre de la portion optique centrale (3) dans le plan orthogonal,
**caractérisé en ce que** la portion optique centrale (3) comprend une surface de sortie centrale (5) en forme de tore asphérique dans le plan d'éclairement et apte à transmettre le faisceau lumineux.

2. Dispositif d'éclairage selon la revendication 1, dans lequel l'élément optique (2) comprend une surface d'entrée (8) et au moins deux surfaces de sortie, et possède une forme générale de lentille convergente dans le plan orthogonal.

3. Dispositif selon la revendication 2, dans lequel chaque portion optique périphérique (4) comprend une surface de sortie périphérique (6) en forme de dioptre cylindrique convergent dans un plan parallèle au plan d'éclairement et apte à transmettre le faisceau lumineux, et une surface de réflexion (7) semi-parabolique dans le plan orthogonal, apte à réfléchir le faisceau lumineux de la source lumineuse (1) vers ladite surface de sortie périphérique (6), les surfaces de réflexion (7) des deux portions optiques périphériques (4) formant conjointement une lentille réfléchissante parabolique.

4. Dispositif selon l'une des revendications 2 ou 3, dans lequel la surface d'entrée (8) possède une surface cylindrique selon le plan d'éclairement.

5. Ensemble d'éclairage (1000) comprenant une pluralité de dispositifs d'éclairage (100) selon l'une quelconque des revendications 1 à 4 alignés dans ledit plan orthogonal.

## Patentansprüche

1. Beleuchtungsvorrichtung (100), die eine Lichtquelle (1) und ein optisches Element (2) enthält, wobei die Lichtquelle (1) eine Vielzahl von ausgerichteten Elektrolumineszenzdioden (10) enthält, und das optische Element (2) ausgebildet ist, um einen von der Lichtquelle (1) emittierten Lichtstrahl parallel zu einer Beleuchtungsebene umzulenken, die die Reihe von Elektrolumineszenzdioden (10) enthält und sich zur Vorderseite der Elektrolumineszenzdioden (10) erstreckt, und den Lichtstrahl in einer Ebene orthogonal zur Beleuchtungsebene zu konzentrieren, um einen Lichtstrahl zu formen, der einen ellipsoiden Querschnitt hat, wobei das optische Element (2) einen zentralen optischen Abschnitt (3) und zwei periphere optische Abschnitte (4) enthält, die zu beiden Seiten des zentralen optischen Abschnitts (3) in der orthogonalen Ebene angeordnet sind,
**dadurch gekennzeichnet, dass** der zentrale optische Abschnitt (3) eine zentrale Ausgangsfläche (5) enthält, die in Form eines asphärischen Torus in der Beleuchtungsebene vorliegt und fähig ist, den Lichtstrahl zu übertragen.

2. Beleuchtungsvorrichtung nach Anspruch 1, wobei das optische Element (2) eine Eingangsfläche (8) und mindestens zwei Ausgangsflächen enthält und eine allgemeine Form einer in der orthogonalen Ebene konvergierenden Linse besitzt.

3. Vorrichtung nach Anspruch 2, wobei jeder periphere optische Abschnitt (4) eine periphere Ausgangsfläche (6) in Form eines zylindrischen Diopters, der in einer Ebene parallel zur Beleuchtungsebene konvergiert und den Lichtstrahl übertragen kann, und eine halb-parabolische Reflexionsfläche (7) in der orthogonalen Ebene enthält, die den Lichtstrahl von der Lichtquelle (1) zur peripheren Ausgangsfläche (6) reflektieren kann, wobei die Reflexionsflächen (7) der zwei peripheren optischen Abschnitte (4) zusammen eine reflektierende parabolische Linse formen.

4. Vorrichtung nach einem der Ansprüche 2 oder 3, wobei die Eingangsfläche (8) eine zylindrische Fläche gemäß der Beleuchtungsebene besitzt.

5. Beleuchtungseinheit (1000), die eine Vielzahl von Beleuchtungsvorrichtungen (100) nach einem der Ansprüche 1 bis 4 enthält, die in der orthogonalen Ebene ausgerichtet sind.

## Claims

1. Lighting device (100) comprising a light source (1) and an optical element (2), the light source (1) comprising a plurality of aligned light-emitting diodes (10), and the optical element (2) being formed to deflect a light beam emitted by the light source (1) parallel to a lighting plane comprising the row of light-emitting diodes (10) and extending towards the front of said light-emitting diodes (10) and concentrate said light beam in a plane orthogonal to the lighting plane, so as to form a light beam with an ellipsoidal section, the optical element (2) comprising a central optical portion (3) and two peripheral optical portions (4) arranged on either side of the central optical portion (3) in the orthogonal plane,
**characterized in that** the central optical portion (3) comprises a central output surface (5) in aspherical toroidal form in the lighting plane and suitable for transmitting the light beam.

2. Lighting device according to Claim 1, in which the optical element (2) comprises an input surface (8) and at least two output surfaces, and has the general form of a lens convergent in the orthogonal plane.

3. Device according to Claim 2, in which each peripheral optical portion (4) comprises a peripheral output surface (6) in cylindrical dioptre form convergent in a plane parallel to the lighting plane and suitable for transmitting the light beam, and a reflection surface (7) semi-parabolic in the orthogonal plane, suitable for reflecting the light beam from the light source (1) towards said peripheral output surface (6), the reflection surfaces (7) of the two peripheral optical portions (4) jointly forming a parabolic reflecting lens.

4. Device according to one of Claims 2 and 3, in which the input surface (8) has a surface that is cylindrical according to the lighting plane.

5. Lighting assembly (1000) comprising a plurality of lighting devices (100) according to any one of Claims 1 to 4 aligned in said orthogonal plane.
